# EUROPEAN PATENT APPLICATION

(11) **EP 2 639 474 A2**
(43) Date of publication of application: **18.09.2013**
(21) Application number: 13152811.9
(22) Date of filing: 28.01.2013
(51) Int. Cl.: F16D 65/60

(54) **Adjustment assembly installation into automatic slack adjuster housing**

(30) Priority: 16.03.2012 US 201213422253
(71) Applicant: ArvinMeritor Technology, LLC, Troy, MI 48084 (US)
(72) Inventor: Kay, Joseph, Highland, MI Michigan 48357 (US); Hayford, Roy, Canton, MI Michigan 48188 (US); Heydenburg, Kurt, Howell, MI Michigan 48843 (US); Mirji, Pradeep, 560 079 Bangalore (IN); Ramachandra, Vishwanath, 560059 Bangalore (IN)
(74) Representative: Jones, John Bryn

(57) **Abstract**

A slack adjuster (40) comprises a worm gear (42) configured to be coupled to a camshaft (14), a worm shaft (52) in engagement with the worm gear, and a housing (44) having a lever (34) configured for connection to a brake chamber output rod (32). The housing includes an opening that receives the worm gear and a blind bore (70) that receives the worm shaft. An adjustment assembly is installed within the blind bore and is coupled to the worm shaft. The adjustment assembly is configured to automatically rotate the worm shaft when brake slack exceeds a predetermined limit.

## Description

### TECHNICAL FIELD

The subject invention relates to an automatic slack adjuster that includes an adjustment assembly that is installed from one direction into a blind-bore formed within a slack adjuster housing.

### BACKGROUND OF THE INVENTION

An automatic slack adjuster is used to adjust a brake assembly as brake linings wear. The automatic slack adjuster adjusts the amount of slack, or "free play", in the brake to ensure that an associated air brake chamber can produce enough actuation force. With too little slack, the brake may drag and overheat, and if there is too much slack, the brake may not be capable of generating enough braking effort to stop the vehicle.

Packaging automatic slack adjusters on axles and suspensions can be difficult in many situations due to lack of available space. In one known configuration, the slack adjuster includes a worm gear that is coupled to a camshaft. A worm shaft is in driving engagement with the worm gear. An adjustment assembly couples the worm shaft to a push rod of a brake chamber. The adjustment assembly is configured to automatically adjust slack as brake linings wear by rotating the worm shaft, which in turn rotates the worm gear and camshaft. The slack adjuster is also configured with a manual adjuster that allows for selective manual adjustment of the slack, which is useful when new brake linings are installed for example.

The worm shaft, worm gear, and adjustment assembly are mounted within a housing. The housing has a lever coupled to the push rod of the brake chamber. The worm shaft in this configuration is positioned to extend in a vertical direction relative to the worm gear, i.e. generally parallel to the lever. A thru-bore having two open ends is formed in the housing to receive the worm shaft and adjustment assembly. The thru-bore is machined from two different directions and adjustment components are inserted through both open ends for installation purposes. Having two open ends provides flexibility for installation of manual adjuster components.

One disadvantage with this known configuration is that the vertical orientation of the worm shaft increases the overall width of the slack adjuster. This makes it difficult to package the slack adjuster in all possible packaging locations. Another disadvantage is that the two open ends of the thru-bore provide potential leak paths for contaminants that may be sprayed onto the slack adjuster by rotating tires.

Other known configurations use a worm gear that is orientated to extend in a horizontal direction relative to the worm gear, i.e. the worm shaft extends transversely relative to the lever. These configurations also include a thru-bore with two open ends. The thru-bore is machined from two different directions and adjustment components are inserted through both open ends for installation purposes. While the horizontal orientation of the worm shaft improves packaging, there is still potential for significant leakage of contaminants into the thru-bore, which can result in premature wear and failure of adjustment components.

### SUMMARY OF THE INVENTION

A slack adjuster provides automatic slack adjustment during normal braking operations by adjusting a camshaft via an adjustment assembly. In one example, the slack adjuster comprises a worm gear configured to be coupled to the camshaft, a worm shaft in engagement with the worm gear, and a housing having a lever configured for connection to a brake chamber output rod. The housing includes an opening that receives the worm gear and a blind bore that receives the worm shaft. An adjustment assembly is installed within the blind bore and is coupled to the worm shaft. The adjustment assembly is configured to automatically rotate the worm shaft when brake slack exceeds a predetermined limit.

In one example, the blind bore extends in a horizontal direction that is transverse to the lever.

In one example, the blind bore is machined from a single direction. The worm shaft and adjustment assembly are then inserted through the only open end of the blind bore. An end cover and seal cooperate to provide a sealed interface once the worm shaft and adjustment assembly are installed.

In one example, the adjustment assembly comprises a control disc that is fixed for rotation with the worm shaft and an actuator disc that is coupled to a push rod. The push rod is configured to be coupled to the lever via a coupling member.

These and other features of the present invention can be best understood from the following specification and drawings, the following of which is a brief description.

### BRIEF DESCRIPTION OF THE DRAWINGS

Figure 1 is a schematic representation of a cam brake assembly.
Figure 2 is an exploded view of a cam brake assembly such as that depicted in Figure 1.
Figure 3 is a side view of a slack adjuster in an assembled condition.
Figure 4 is an exploded view of the slack adjuster of Figure 3.
Figure 5 is a cross-sectional view of the slack adjuster of Figure 3.
Figure 6A is a magnified view of Figure 5 showing a manual adjuster in a non-adjusting position.
Figure 6B is a magnified view of Figure 5 showing the manual adjuster in an adjusting position.
Figure 7 is a figure similar to Figure 3 but shows a cross-section at a connection between an actuator disc and push rod.

### DETAILED DESCRIPTION OF A PREFERRED EMBODIMENT

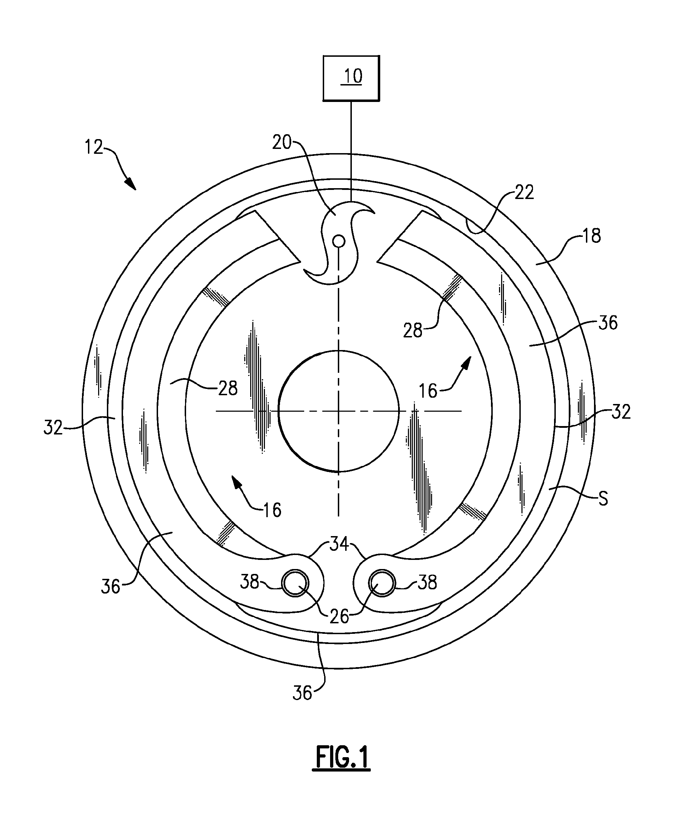

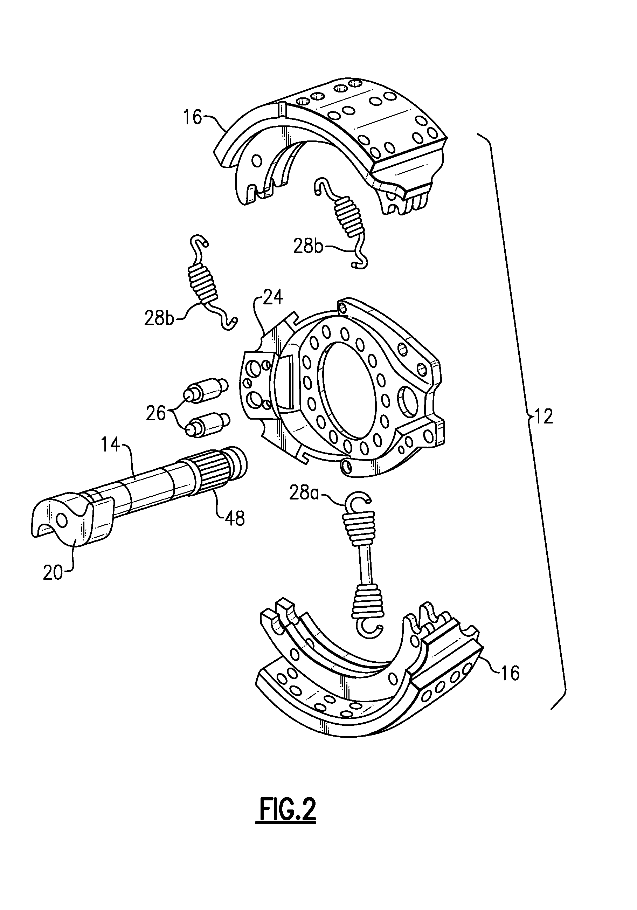

As shown in Figures 1 and 2, a brake actuation system 10 is used to actuate a vehicle wheel brake 12 in response to a brake request. In one example, the wheel brake 12 comprises a cam brake with a camshaft 14 that is configured to press a pair of brake shoes 16 into engagement with a brake drum 18 configured to rotate with a vehicle wheel. The camshaft 14 includes an S-shaped cam 20 at one end that, upon rotation, is configured to pivot the brake shoes 16 outwardly into engagement with an inner braking surface 22 of the drum 18.

The brake shoes 16 are coupled to a brake spider 24 via anchor pins 26. The brake spider 24 is configured to be mounted to an axle housing or non-rotating wheel end component. A return spring 28a facilitates returning the brake shoes 16 to the non-applied position upon completion of a braking request. Shoe retaining springs 28b couple the brake shoes together adjacent the anchor pins 26.

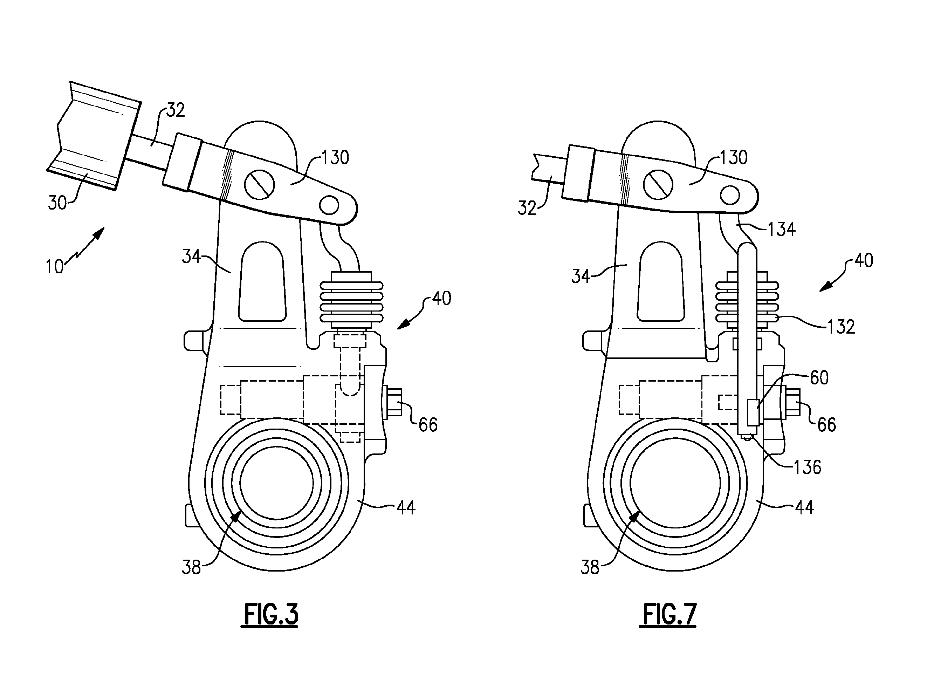

As shown in Figure 3, the actuation system 10 includes a pressure input member, such as a brake air chamber 30 for example, which has an actuating rod 32 that is coupled to a brake actuation lever 34. Pressure operating on a diaphragm within the brake chamber 30 in response to a brake request, such as that initiated by depression of a brake foot pedal, forces the actuating rod 32 outwardly, which in turn rotates the actuation lever 34. The lever 34 extends in a generally vertical direction and is coupled to the camshaft 14, which rotates the cam 20 to press the brake shoes 16 outwardly into engagement with the brake drum 18 to stop the vehicle.

When the brake pedal is released, air pressure is exhausted from the brake chamber 30 and a spring or other return mechanism is configured to return the actuating rod 32 and lever 34 to a retracted, brake-off position. This also causes the brake shoes 16 to return to a non-applied position. In this non-applied position, there is a clearance space S, i.e. slack, between brake friction linings 36 on the brake shoes 16 and the engagement surface 22 on the brake drum 18. Over time, the thickness of the brake friction linings 36 decreases or wears, and this in turn increases the slack. If slack becomes excessive, it may not be possible to provide a sufficient braking force to the drum 18, i.e. the actuating rod 32 may not be able to rotate the lever 34 far enough to exert a sufficient braking force against the drum 18.

To ensure that the actuation lever 34 is rotated to produce a desired amount of brake force, the lever 34 is coupled to a coupling member 38, which can be adjusted throughout the life of the brake shoes to ensure that the cam 20 is properly positioned in relation to the brake shoes to provide the desired braking force. An automatic slack adjuster mechanism 40 is used to automatically readjust the coupling member as the brake linings wear.

When an automatic slack adjuster mechanism 40 is installed, a brake chamber stroke measurement is set, which corresponds to the desired or correct shoe-to-drum clearance. As the brake linings 36 wear, this clearance, i.e. slack, increases and the brake chamber actuating rod 32 must travel farther to apply the brakes. Once this clearance or "slack" is increased beyond a predetermined limit, the slack adjuster is configured to automatically adjust during the return stroke to maintain the correct shoe-to-drum clearance. If the air brake chamber push rod stroke is within acceptable limits during operation, no adjustment occurs.

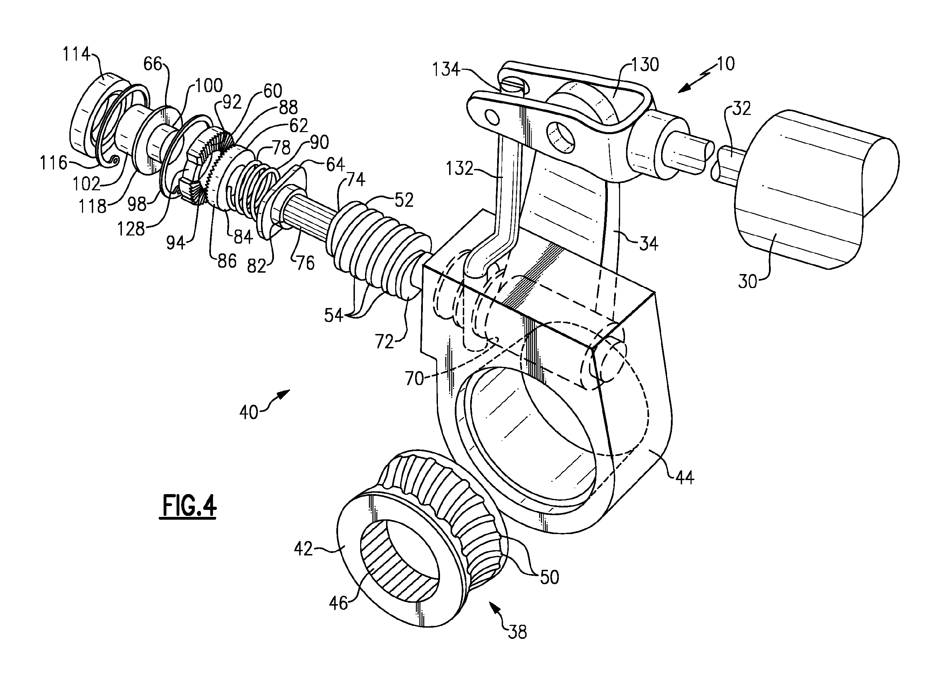

In the example shown in Figures 4-6B, the coupling member 38 comprises a worm gear 42 positioned within a housing 44. The worm gear 42 includes a splined inner opening 46 that is attached to a splined end 48 of the camshaft 14 (Figure 2) that is opposite of the cam 20. A first set of worm teeth 50 are formed about an outer circumference of the worm gear 42.

The slack adjuster mechanism 40 includes a worm shaft 52, which has a second set of worm teeth 54 that are directly engaged with the first set of worm teeth 50. The worm shaft 52 is positioned within the housing 44 such that the worm shaft 52 is extending in a generally horizontal direction relative to the lever 34. In other words, the worm shaft 52 extends transversely relative to the lever 34, as opposed to extending generally parallel to the lever 34.

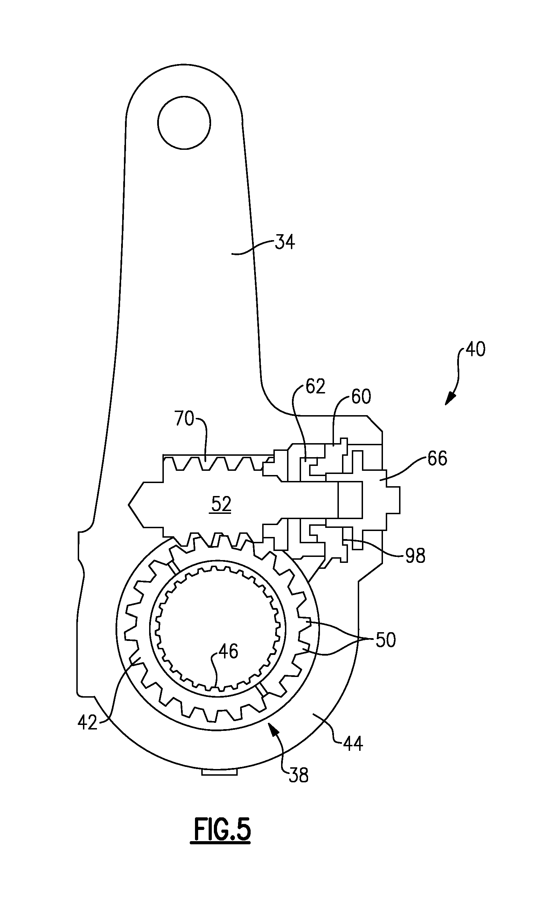

The slack adjuster mechanism 40 further includes an actuator disc 60, a control disc 62, a bushing 64, and an end cover 66. The housing 44 includes a blind-bore or blind-hole 70, i.e. a hole having only one open end, which receives these components, as well as the worm shaft 52, as a sub-assembly. The blind-hole 70 is solely formed by a machining operation from one side of the housing 44 such that the hole 70 does not extend entirely through the housing 44 as shown in Figure 5. This provides a fully enclosed end within the housing itself, and eliminates any cap, plug, or cover that is typically required to seal off an open end to protect the internal components from contaminants.

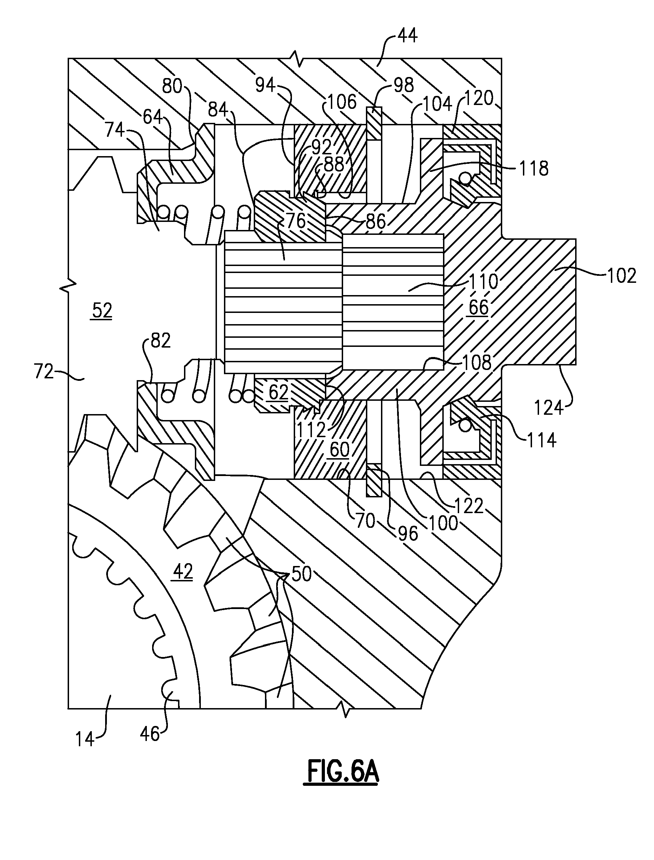

The worm shaft 52 includes a gear portion 72 that includes the second set of worm teeth 54, a reduced neck portion 74 that supports the bushing 64, and a splined shaft portion 76 that is coupled to the control disc 62 via a mating splined bore 78 formed within the control disc 62. As shown in Figure 6A, one end face of the bushing 64 engages an end face on the worm shaft between the neck portion 74 and gear portion 72. An opposite end face of the bushing 64 engages a shoulder 80 formed within the housing 44. The bushing 64 includes a bore 82 that rotatably supports the worm shaft 52 at the neck portion 74.

The control disc 62 includes a first end face 84 that faces the bushing 64 and a second end face 86 that faces the end cover 66. The control disc 62 includes a plurality of control teeth 88 on the second end face 86. A resilient member 90, such as a coil spring for example, has one spring end in engagement with the first end face 84 and a second spring end in engagement with the bushing 64. The resilient member 90 loads the control teeth 88 into engagement with actuator teeth 92 on the actuator disc 60. As such, the actuator 60 and control 62 discs are always in contact with each other. In one rotational direction, i.e. a brake apply direction, the actuator teeth 92 skip past the control teeth 88. In an opposite rotational direction, i.e. a brake return direction, the actuator teeth 92 drive against the control teeth 88, causing the control disc 62 to rotate, and hence the worm shaft 52 to rotate.

The actuator teeth 92 are formed on a first end 94 of the actuator disc 60, which faces the control disc 62. A second end 96 of the actuator disc 60 faces the end cover 66. The actuator disc 60 has an outer circumference that is close to the diameter of the blind-hole 70 such that the actuator disc 60 sits within the blind-hole in a light press-fit or slightly loose fit. A snap ring 98 is installed within the blind-hole to hold the actuator disc 60 at a desired axial location.

The end cover 66 includes a hub portion 100 at one end and a knob portion 102 that extends outwardly of the housing 44 at an opposite end. The hub portion 100 includes an outer surface 104 that has a slightly smaller diameter than an inner diameter of a center bore 106 of the actuator disc 60. This allows the hub portion 100 to be inserted into the center bore 106 without contacting the actuator disc 60. The hub portion 100 includes a blind-bore 108 that has a splined inner circumferential surface 110. An end face 112 of the hub portion 100 abuts against the control disc 62.

A seal 114 holds the end cover 66 within the bore 70. An optional snap ring 116 (Figure 4) could also be used to provide additional securement for the end cover 66. The seal 114 abuts against a flange portion 118 of the end cover 66. The flange portion 118 is generally centrally located on the end cover and is defined by a diameter that is larger than the hub 100 and knob 102 portions. An outer surface 120 of the seal 114 sealing engages a surface 122 that defines the bore 70.

The knob portion 102 extends outwardly of the housing 44. In one example, the knob portion 102 is configured to provide a grasping surface and/or a tool engagement surface 124 to provide a manual adjustment feature. This will be discussed in greater detail below.

The housing 44 (Figures 3-4) includes a clevis attachment 130 that is coupled to the push rod 32 of the air chamber 30 in a known manner. A push rod 132 (Figure 4) has a first end 134 coupled to the clevis attachment 130 in a known manner and a second end 136 that is in engagement with the actuator disc 60 as shown in Figure 7. In the example shown, the actuator disc 60 includes a pair of grooves 128 (Figure 4) formed in an outer surface on one side of the actuator disc 60. A mating portion of the push rod 132, adjacent the second end 136, cooperates with these grooves 128 such that the push rod 132 and actuator disc 60 are always in contact. The housing 44 includes an opening on an upper surface that extends into the blind bore to allow the push rod 132 to engage the actuator disc 60.

The slack adjuster mechanism 40 operates in the following manner. A brake request is initiated, for example, by pressing a brake pedal. In the brake apply direction, if there is significant lining wear, i.e. lining wear has exceed a predetermined limit, the push rod 132 is lifted and rotates the actuator disc 60 such that the actuator teeth 92 skip past the control teeth 88 at least one increment, i.e. at least one tooth increment. The adjustment is made on the brake return stroke as the actuator teeth 92 and control teeth 88 are in driving engagement upon opposite rotation, i.e. the actuator 60 and control 62 discs are locked together on the return stroke. This causes the worm shaft 52 to provide incremental adjustment by rotating the worm gear 42, which in turn rotates the camshaft 14 to adjust the position of the cam 20.

The slack adjustment mechanism 40 can also be manually adjusted as needed. In a normal, non-adjustment position (Figure 6A), the seal 114 holds the end cover 66 in place so that the end cover cannot fall out of the hole 70. The splined inner circumferential surface 110 of the bore 108 is axially spaced from the splined shaft portion 76 of the worm shaft 52. In this position the end cover 66 can rotate freely within the hole 70.

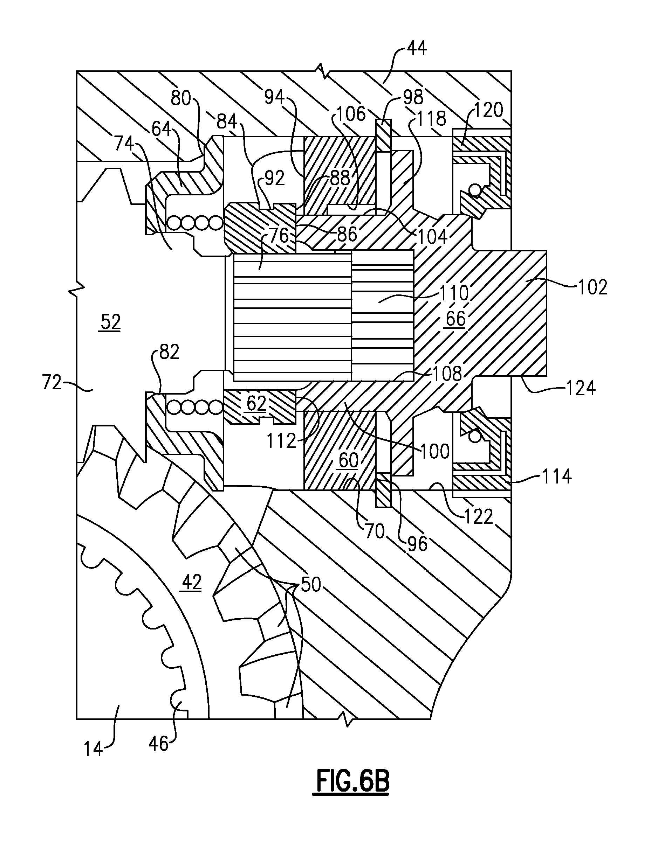

To manually adjust the worm gear, the end cover 66 is pressed axially inward in a direction toward the worm shaft 52. This movement results in two simultaneous actions. First, the control disc 62 is disengaged from the actuator disc 60. Second, the splined inner circumferential surface 110 of the end cover 66 is slid into engagement with the splined shaft portion 76 of the worm shaft 52, as shown in Figure 6B. Rotation of the end cover 66 in this position results in rotation of the worm shaft 52 to adjust slack by rotating the worm gear 42 and camshaft 14. To rotate the end cover 66, the knob portion 102 is rotated by using a tool, for example.

This manual adjustment configuration is advantageous for several reasons. The end cover 66 serves to seal the open end of the blind-hole 70 to prevent contaminants from adversely affecting the internal components. Also, a single tool can be used to provide the adjustment. Finally, the end cover does not interface with other components during non-manual adjustment operations. As such, the torque required to adjust the slack is low. Also, there is no wear or damage to adjuster components during manual adjustment because the end cover has disengaged the automatic adjustment system, i.e. the control disc 62 is disengaged from the actuator disc 60. Application serial number 13,422188, filed March 16, 2012 and assigned to the assignee of the present application, is directed to manual adjustment.

Another advantage with the subject slack adjuster mechanism 40 is provided by the blind-hole 70. By assembling the internal slack adjuster components as a sub-assembly that is inserted into the blind-hole 70, overall packaging size is reduced. The compact sub-assembly of internal components, i.e. actuator disc 60, control disc 62, spring 90, bushing 64, and end cover 66, allow for a very short worm shaft 52 and a narrower housing 44. Further, by using a blind-hole as opposed to having a hole open at both ends, a potential leak path is eliminated. This is critical due to the location of the slack adjuster in relation to the vehicle tires which spray water and road debris onto the slack adjuster. Finally, the blind-hole configuration offers a design where all machining can be accomplished from one direction. All the internal components are loaded in the same direction, which simplifies assembly and shortens the time for manufacturing purposes.

The cam operated brake is shown merely as an example, it should be understood that other brake configurations could also be used with the subject slack adjuster. Further, although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A slack adjuster comprising:
a worm gear configured to be coupled to a camshaft;
a worm shaft in engagement with said worm gear;
a housing having a lever configured for connection to a brake chamber output rod, said housing including an opening that receives said worm gear and a blind bore that receives said worm shaft; and
an adjustment assembly installed within the blind bore and coupled to said worm shaft, said adjustment assembly being configured to automatically rotate said worm shaft when brake slack exceeds a predetermined limit.

2. The slack adjuster according to claim 1, wherein said blind bore extends transversely relative to said lever.

3. The slack adjuster according to claim 2, wherein said blind bore has only one open end such that said worm shaft and said adjustment assembly are insertable into said blind bore via a single direction.

4. The slack adjuster according to claim 3, wherein said open end is closed by an end cover, and including a seal that provides a sealed interface between said end cover and said housing.

5. The slack adjuster according to claim 2, wherein said adjustment assembly comprises a control disc that is fixed for rotation with said worm shaft and an actuator disc that is coupled to a push rod, said push rod configured to be coupled to said lever via a coupling member.

6. The slack adjuster according to claim 5 wherein said control disc includes a plurality of control teeth and said actuator disc includes a plurality of actuator teeth that are in engagement with said control teeth, and wherein during a brake apply stroke said push rod rotates said actuator disc such that said actuator teeth skip over said control teeth when slack exceeds a predetermined limit, and wherein slack adjustment is automatically provided on a brake return stroke as said actuator teeth drive said control teeth causing said worm shaft to rotate.

7. The slack adjuster according to claim 6 including a resilient member that biases said control teeth and said actuator teeth into engagement with each other.

8. The slack adjuster according to claim 7 including an end cover that is moveable between a non-adjustment position where said end cover is de-coupled from said worm shaft and a manual adjustment position where said end cover is coupled to said worm shaft such that a position of said worm shaft can be manually adjusted.

9. The slack adjuster according to claim 8 wherein said end cover is moveable to said manual adjustment position by disengaging said control teeth from said actuator teeth by overcoming a biasing force of said resilient member, and wherein coupling of said end cover to said worm shaft and disengagement of said control and actuator discs occurs simultaneously, preferably the slack adjuster includes a seal in sealing engagement with said end cover and a surface of said blind bore, said seal being configured to retain said end cover within said blind bore.

10. A method of assembling an automatic slack adjuster comprising the steps of:
a) providing a slack adjuster housing have an opening configured to receive a worm gear and a lever configured for connection to a brake chamber output rod;
b) machining a blind bore in the slack adjuster housing; and
c) installing a worm shaft and adjustment assembly into the blind bore.

11. The method according to claim 10 wherein step b) further includes machining the blind bore using a machining operation that is performed in a single direction.

12. The method according to claim 10 wherein step b) further includes machining the blind bore to extend in a horizontal direction that is transverse to the lever.

13. The method according to claim 12 wherein the blind bore only has one open end, and wherein step c) further includes inserting the worm shaft through the open end and into the blind bore such that the worm shaft is in driving engagement with said worm gear.

14. The method according to claim 13 wherein the adjustment assembly comprises a control disc and an actuator disc, and wherein step c) further includes the steps of
fixing the control disc for rotation with the worm shaft,
coupling the actuator disc to a push rod that receives slack adjustment input, and
resiliently biasing a plurality of control teeth on the control disc into engagement with a plurality of actuator teeth on the actuator disc.

15. The method according to claim 13 including sealing the only open end of the blind bore with an end cover and seal.
